(19) Europäisches Patentamt
European Patent Office
Office européen des brevets

(11) Publication number: **0 091 184**
**B1**

(12) **EUROPEAN PATENT SPECIFICATION**

(45) Date of publication of patent specification: **23.09.87**

(51) Int. Cl.$^4$: **C 09 K 11/54,** H 01 J 29/20

(21) Application number: **83300844.4**

(22) Date of filing: **18.02.83**

(54) **Phosphors and their use in electron-excited fluorescent displays.**

(30) Priority: **19.02.82 JP 25545/82**
**30.04.82 JP 74006/82**
**30.04.82 JP 74007/82**
**07.06.82 JP 97329/82**

(43) Date of publication of application:
**12.10.83 Bulletin 83/41**

(45) Publication of the grant of the patent:
**23.09.87 Bulletin 87/39**

(84) Designated Contracting States:
**DE GB NL**

(56) References cited:
**EP-A-0 034 059**

(73) Proprietor: **KASEI OPTONIX, LTD.**
**2-7-18 Hamamatsu-cho Minato-ku**
**Tokyo (JP)**

(72) Inventor: **Hase, Takashi**
**579 Nakano Ebina-shi**
**Kanagawa-ken (JP)**
Inventor: **Yoshida, Hidemi**
**6-20-22 Satsukigaoka Midori-ku**
**Yokohama-shi Kanagawa-ken (JP)**

(74) Representative: **Perry, Robert Edward**
**GILL JENNINGS & EVERY 53-64 Chancery Lane**
**London WC2A 1HN (GB)**

**EP 0 091 184 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a sulphide phosphor which emits green to orange, e.g. yellow, light, with long after-glow, when excited with an electron beam, to a long after-glow white-emitting phosphor containing the yellow-emitting sulphide phosphor (as a yellow-emitting constituent), and to an electron-excited fluorescent display device using the green to orange-emitting phosphor or the white-emitting phosphor.

Electron-excited fluorescent display devices, a term which is exemplified by, and may be interpreted herein as meaning, cathode ray tube (CRT) and low-velocity electron-excited fluorescent display devices, are used for various purposes, for example, in computer system units which display characters and figures, and in aircraft control display units. CRTs exhibiting high resolution are desired.

It is known to reduce the frame frequency of a CRT in order to improve its resolution, e.g. from approximately 55 Hz in an ordinary, e.g. television, CRT, to approximately 30 Hz, and thereby expand the signal frequency band by a factor of approximately two, or approximately to halve the image frequency. Reduction of the frame frequency of the CRT increases resolution, because the image frequency band of a CRT drive circuit is determined by the product of the frame frequency and the signal frequency band.

The fluorescent screen of a high resolution CRT as described above should comprise a phosphor exhibiting long after-glow. If the phosphor has short after-glow, the image displayed on the fluorescent screen flickers undesirably, due to the low scanning speed on the fluorescent screen. The term "after-glow period", as used herein, means the time required for the emission luminance to decrease to 10% of the emission luminance under excitation, after excitation of the phosphor is stopped, i.e. the 10% luminance after-glow period.

Long after-glow phosphors which are known for use in high resolution CRTs include a manganese and arsenic-activated zinc silicate green-emitting phosphor ($Zn_2SiO_4$:Mn,As), a manganese-activated potassium magnesium fluoride orange-emitting phosphor ($KMgF_3$:Mn), a lead and manganese-activated calcium silicate orange-emitting phosphor ($CaSiO_3$:Pb,Mn), a manganese-activated magnesium fluoride red-emitting phosphor ($MgF_2$:Mn), and a manganese-activated zinc magnesium orthophosphate red-emitting phosphor [$(Zn,Mg)_3(PO_4)_2$:Mn]. However, these known phosphors exhibit only limited intrinsic emission colour and after-glow period characteristics, and their coating characteristics are unsatisfactory.

Recent high resolution CRTs require long after-glow phosphors exhibiting various emission colour tones, emission of high luminance, and a wide range of afterglow periods. In particular, a phosphor emitting yellow light and long after-glow is necessary for black-and-white display CRTs. Further, long after-glow green-emitting and orange-emitting phosphors are required for use in monochrome display devices.

However, no single phosphor emitting white light, with long after-glow, is known. Further, since neither long after-glow blue-emitting phosphors nor long after-glow yellow-emitting phosphors are known, no long after-glow white-emitting phosphor can be obtained by mixing them.

Another approach to obtain white emission is to mix red-emitting, green-emitting and blue-emitting phosphors. However, no suitable long after-glow blue-emitting phosphor is known. In addition, since long after-glow red-emitting and green-emitting phosphors exhibit different after-glow characteristics curves, colour drift occurs in the after-glow. Further, colour shading readily occurs when phosphors emitting different colours are mixed.

Because no long after-glow white-emitting phosphor is known, there is no black-and-white television CRT, with a fluorescent screen, which can display an image at high resolution.

The visual sensitivity of the human eye is highest to green light. Green light can be sensed as highly luminous compared with the other emission colours at a given emission energy, and causes little eye fatigue, even over a long viewing period. Display CRTs (hereinafter simply referred to as "CRTs") emitting green light and exhibiting high resolution are therefore widely used.

The only available long after-glow green-emitting phosphors, for use in such CRTs, which has both satisfactory emission luminance and after-glow period, is a manganese and arsenic-activated zinc silicate phosphor (P39 phosphor). However, the presence of arsenic presents a very real problem with regard to pollution. Further, the known preparation of P39 phosphor gives an unsatisfactory crystal shape, a maximum grain size of 5, e.g. 2 to 3, µm, and a broad grain size distribution. Grain sizes of 6 to 12 µm, and narrow size distribution, are desirable. The coating characteristics of P39 phosphor are therefore poor. The yield of P39 phosphor drops markedly when classified to obtain grains of uniform grain size, and the phosphor coating formed on a fluorescent screen is uneven, owing to differences in grain size, when mixed with another phosphor.

Orange-emitting phosphors are also used for CRTs of high resolution, since orange light does not cause much eye fatigue even over a long viewing period. A known long after-glow orange-emitting phosphor for such use is a mixture of the P39 phosphor and a red-emitting manganese-activated zinc phosphate (P27 phosphor). This product has the disadvantage that the two phosphors exhibit different emission colours, and therefore develops colour shading at high resolution. Further, the emission luminance of the mixture is low.

A lead and manganese-activated calcium silicate phosphor (P25 phosphor) is a known single long after-glow orange-emitting phosphor. However, its emission luminance is too low for practical use. The emission colour scarcely changes with different amounts of activator.

EP—A—0034059 discloses a CRT having a fluorescent screen using a copper and aluminium-activated zinc sulphide phosphor (ZnS:Cu,Al). This phosphor emits in the yellowish-green region.

According to the present invention, a sulphide phosphor which emits green to orange light, with long after-glow, has the formula

$$(Zn_{1-x},Cd_x)S:eM,fGa,gX$$

wherein M is at least one of copper and gold; X is at least one of chlorine, bromine, iodine, fluorine and aluminium; $0 \leqq x \leqq 0.4$; $10^{-8} \leqq e \leqq 10^{-2}$; $5 \times 10^{-7} \leqq f \leqq 2 \times 10^{-4}$; and $5 \times 10^{-8} \leqq g \leqq 5 \times 10^{-3}$. The values e, f and g represent the amounts of activator (M) and co-activators (Ga and X), respectively, expressed in grams per gram of the unactivated phosphor.

A sulphide phosphor of the invention can emit any colour from green to orange by selection of x (the amount of Cd in the matrix), and the amount (e) and type (M) of the activator. Further, by selection of the amounts (values f and g) of the first co-activator (Ga) and the second co-activator (X), various after-glow periods can be provided. Sulphide phosphors of the invention exhibit good coating characteristics and can form a satisfactory fluorescent screen.

Depending on their composition and the firing temperature used in their preparation, phosphors of the invention can comprise the cubic or hexagonal crystal system as their main crystalline phase. The cubic crystal system emits at a slightly longer wavelength. The cubic system is preferred over the hexagonal because it exhibits higher (e.g. by a factor of 1.3 to 2) emission luminance and, when the amount of Ga is low and therefore imparts relatively high emission luminance and emission colour purity, longer after-glow.

In particular, when x=0 and M is copper, a phosphor of the invention is green-emitting and has the cubic or hexagonal structure. When $0 \leqq x \leqq 0.15$ and M is gold or when $0.07 \leqq x \leqq 0.20$ and M is copper, a phosphor of the invention is yellow-emitting and has the cubic or hexagonal structure. When $0.15 \leqq x \leqq 0.35$ and M is gold, or when $0.20 \leqq x \leqq 0.35$ and M is copper, the phosphor is orange-emitting and has the hexagonal structure.

In general, $5 \times 10^{-6} \leqq e \leqq 5 \times 10^{-3}$, for long after-glow. Also for long after-glow, and for luminance and colour purity of emission, as well as cubic structure, $5 \times 10^{-6} \leqq f \leqq 2 \times 10^{-4}$.

In one preferred embodiment of the invention, a green-to-yellow-green-emitting phosphor, x=0, $10^{-6} \leqq e \leqq 10^{-2}$ and $5 \times 10^{-8} \leqq g \leqq 5 \times 10^{-4}$, and more preferably $10^{-5} \leqq e \leqq 5 \times 10^{-4}$ and $5 \times 10^{-5} \leqq g \leqq 2 \times 10^{-4}$; generally, for best luminance, $10^{-5} \leqq e \leqq 5 \times 10^{-4}$, $5 \times 10^{-7} \leqq f \leqq 5 \times 10^{-4}$ and $5 \times 10^{-7} \leqq g \leqq 2 \times 10^{-4}$. In this case, in general, there is green emission if M is Cu, and there is a change to yellow-green with increasing amounts of Au in a mixture of Au and Cu.

In another preferred embodiment of the invention, a yellow-emitting phosphor, $0 \leqq x \leqq 0.3$ and $10^{-6} \leqq e \leqq 10^{-2}$. For best luminance and colour purity, $10^{-5} \leqq e \leqq 5 \times 10^{-3}$ and $0 \leqq x \leqq 0.2$. For good after-glow and emission luminance, $5 \times 10^{-7} \leqq f \leqq 10^{-4}$ and $5 \times 10^{-8} \leqq g \leqq 5 \times 10^{-4}$.

In a further preferred embodiment of the invention, an orange-emitting phosphor, $0.15 \leqq x \leqq 0.35$ and $10^{-6} \leqq e \leqq 10^{-2}$; more preferably $10^{-5} \leqq e \leqq 6 \times 10^{-3}$ and also $5 \times 10^{-7} \leqq g \leqq 10^{-3}$. For best luminance and image quality, $10^{-5} \leqq e \leqq 6 \times 10^{-3}$, $5 \times 10^{-7} \leqq f \leqq 5 \times 10^{-4}$ and $5 \times 10^{-7} \leqq g \leqq 10^{-3}$.

A sulphide phosphor of the invention preferably additionally contains, per gram of the matrix, from 0.1 μg to 8 mg sulphur. This can provide an increase in emission luminance of up to 10%.

In addition to sulphur, a phosphor of the invention may include selenium (which may shift emission wavelength to the longer side). In addition to gallium, scandium may be used as a first co-activator. Other activators which may be used are divalent europium, bismuth and antimony.

Pigments may be included, e.g. in an amount of 0.5 to 40 parts by weight per 100 parts by weight of the phosphor, in order to improve contrast. A pigment may be black (e.g. iron oxide or tungsten) or of approximately the same colour as the phosphor's emission colour, e.g. a green $TiO_2$-ZnO-CoO-NiO-type oxide pigment. Suitable orange pigments are red lead, molybdenum orange and cadmium sulfoselenide.

A white-emitting sulphide phosphor according to the invention comprises 0.34 to 5 parts of a yellow-emitting phosphor as described above (when $0 \leqq x \leqq 0.3$ and $10^{-6} \leqq e \leqq 10^{-2}$) and one part by weight of a long after-glow blue-emitting phosphor. The specified first phosphor is defined herein as emitting yellow light although, strictly, yellow-green to yellow light is emitted at the given x and e values. For colour purity and emission luminance of the yellow-emitting phosphor, it is preferred that $10^{-5} \leqq e \leqq 5 \times 10^{-3}$ and $0 \leqq x \leqq 0.2$. For after-glow, preferably $5 \times 10^{-8} \leqq g \leqq 10^{-3}$. For after-glow and emission luminance, preferably $5 \times 10^{-7} \leqq f \leqq 10^{-4}$ and $5 \times 10^{-8} \leqq g \leqq 10^{-4}$.

The blue-emitting phosphor preferably has the formula

$$ZnS:aAg,bM',cGa,dX'$$

wherein M' is at least one of copper and gold; X' is at least one of chlorine, bromine, iodine, fluorine and aluminium; $5 \times 10^{-6} \leqq a \leqq 10^{-3}$; $0 \leqq b \leqq 2 \times 10^{-4}$; $10^{-8} \leqq c \leqq 10^{-3}$; and $5 \times 10^{-8} \leqq d \leqq 5 \times 10^{-4}$. The values a, b, c and d represent the amounts of the activators and co-activators, expressed in grams per gram of the unactivated phosphor. Preferably, for colour purity and emission luminance, $5 \times 10^{-6} \leqq a \leqq 5 \times 10^{-4}$ and $0 \leqq b \leqq 10^{-5}$, $10^{-7} \leqq c \leqq 10^{-4}$ and $10^{-7} \leqq d \leqq 10^{-4}$. Such blue-emitting phosphors may be obtained by the

methods described in, for example, Japanese Patent Applications Nos. 56(1981)—176170, 56(1981)—180721, 56(1981)—181624, 56(1981)—212278, 57(1982)—1131 and 57(1982)—12866.

A white-emitting phosphor of the invention can exhibit white emission, free of colour drift, because the after-glow characteristics of the blue-emitting and yellow-emitting phosphors can be made approximately equal. The white emission depends on the relative amounts of the yellow-emitting and blue-emitting phosphors.

White emission can be in the region surrounded by the CIE system chromaticity points A ($x=y=0.23$), B ($x=0.25$, $y=0.35$), C ($x=0.35$, $y=0.040$) and D ($x=0.35$, $y=0.30$). Preferably, there are between 0.5 and 4.0 parts of the yellow-emitting phosphor per part of the blue-emitting phosphor, so that emission is of greater purity, in the region surrounded by the CIE chromaticity points A′ ($x=y=0.25$), B′ ($x=0.25$, $y=0.30$), C′ ($x=0.32$, $y=0.37$) and D′ ($x=0.32$, $y=0.30$).

It is preferred that the blue-emitting and yellow-emitting phosphors in a white-emitting phosphor of the invention each comprise a cubic crystal system as the main crystalline phase. Alternatively, the blue-emitting phosphor may comprise a cubic crystal system as the main crystalline phase, while the yellow-emitting phosphor comprises a hexagonal crystal system as the main crystalline phase, and $0.05 \leqq x \leqq 0.3$.

The after-glow periods associated with phosphors of the invention are determined following excitation using an electron beam having a current density of 4 $mA/m^2$. It is a characteristic of phosphors of the invention that their after-glow period varies greatly according to the current density of the exciting electron beam, the period increasing when the current density decreases.

In order to prepare a phosphor of the invention, a first starting material, for the phosphor matrix, is crude zinc sulphide or zinc cadmium sulphide powder, optionally together with sulphur. The raw material for the activator is at least one gold and/or copper compound such as the nitrate, sulphide or a halide. The raw material for the first co-activator is at least one gallium compound such as the nitrate, sulphide or a halide. The raw material for the second co-activator is at least one compound selected from chlorides, bromides, iodides and fluorides of alkali metals (Na, K, Li, Rb and Cs) and alkaline earth metals (Ca, Mg, Sr, Zn, Cd and Ba), and aluminium compounds such as the nitrate, sulphate, oxide or a halide.

The raw material for the matrix and sulphur can be prepared, for example, by adding ammonium sulphide to a weakly acidic aqueous zinc sulphate or zinc cadmium sulphide solution having a pH of 4 to 6 (which is maintained constant), thereby precipitating zinc sulphide or zinc cadmium sulphide. The amount of sulphur in excess of the stoichiometric amount in the crude zinc sulphide or zinc cadmium sulphide powder thus prepared increases with decreasing pH. Most of the sulphur is lost during subsequent firing, and the desired amount of sulphur in the product is only a very small proportion of the original.

The amounts of the various raw materials are chosen so that the product has a composition of a phosphor of, or used in, the invention. All the aluminium in raw materials for the activator and first co-activator may serve as the second co-activator. The raw materials for the activator and either or both co-activators may be halides, and, if the second co-activator includes a halogen, it should be noted that a major proportion of the halogen contained in the raw materials is lost during firing. An alkali metal or alkaline earth metal halide serves both as a halogen donor and as a flux.

In preparation, appropriate amounts of the raw materials are weighed, and intimately mixed in a pulverising mixer such as a ball mill or mixer mill. The mixing may be conducted wet, if the raw material for the activator or either or both co-activators is in the form of a solution. In this case, the mixture of raw materials which is obtained is dried.

The raw material mixture is charged into a heat-resistant vessel such as a quartz crucible or quartz tube, and fired. The firing is carried out in a sulphiding atmosphere containing, for example, hydrogen sulphide, sulphur vapour or carbon disulphide. The firing temperature is preferably from 600° to 1200°C, more preferably 600° to 1050°C and most preferably 800° to 1050°C. When the phosphor contains zinc sulphide as the matrix, the hexagonal crystal system is the main crystalline phase when the firing temperature is higher than 1050°C; when the firing temperature is below 1050°C, the cubic crystal system is the main crystalline phase. This is evidence that the phosphor containing zinc sulphide as the matrix has a phase transition point in the vicinity of 1050°C. When the phosphor contains zinc cadmium sulphide as the matrix, its phase transition point depends on the Cd content and the firing temperature. In general, the hexagonal crystal system is likely to predominate with an increasing Cd content; a phosphor having a matrix in which at least 5, especially at least 10 ($xx \geqq 0.1$), mol % zinc is replaced by cadmium predominantly manifests the hexagonal crystal system.

The firing period depends, inter alia, on the firing temperature and the relative amounts of the raw materials. When the firing temperature is in the preferred range, the firing period is preferably from 0.5 to 7 hours. After firing, the product is washed with water, dried and sieved, in order to obtain a phosphor in accordance with the present invention. The phosphor may be surface-treated or selected for grain size, as is known.

An electron-excited fluorescent display device according to the invention comprises a fluorescent screen including a phosphor of the invention. The fluorescent screen can be uniform, free of colour shading, since a white-emitting phosphor of the invention can contain blue-emitting and yellow-emitting phosphors having substantially the same grain size distribution. Further, since the after-glow period can be freely adjusted, any suitable frame frequency can be used.

A screen of the invention may contain 0.5 to 40% by weight, based on the weight of the phosphor, of a pigment. The pigment is green or black when the phosphor emits green to yellow light, or is orange or black when the phosphor emits orange light.

An electron-excited fluorescent display device which includes a screen in accordance with the present invention is of the type which gives a display when excited with an electron beam, and comprises a phosphor of the invention as the major portion of the green to orange-emitting component of the fluorescent screen.

Electron-excited fluorescent display devices of this type include fine display CRTs such as black-and-white and monochrome CRTs, and fluorescent display devices excited with a low-velocity electron beam. Electron-excited fluorescent display devices in accordance with the present invention will now be described in further detail, taking high resolution CRTs as an example.

In particular, a display device according to the invention includes a screen of the invention, and the device is in the form of a cathode ray tube provided with an electron gun emitting cathode rays having a beam diameter (at the fluorescent screen) and a frame frequency, respectively, 0.05 to 0.4 mm and 20 to 50 Hz, 0.01 to 0.3 mm and 30 to 45 Hz, or 0.07 to 0.3 mm and 25 to 40 Hz. The fluorescent screen is formed on a plate standing facing the electron gun.

A display device according to the invention will now be illustrated by way of example with reference to Figure 6. This drawing shows a CRT constructed in almost the same manner as a conventional monochrome emission CRT (such as a black-and-white television CRT), except for the constituents of the electron gun and the fluorescent screen. In particular, Figure 6 shows a CRT having an electron gun 3 positioned at a neck portion of a funnel 1, and a fluorescent screen 5 formed over the entire surface of a face plate 4 standing facing the electron gun 3. A deposited aluminium film 6 (which is generally used), for preventing the charge-up phenomenon at the time of excitation, is positioned on the rear side of the fluorescent screen 5. The fluorescent screen 5 comprises a specific phosphor of the invention, and the electron gun 3 has a specific beam diameter and a specific frame frequency.

In a first embodiment, the CRT exhibits a single emission colour, the beam diameter is 0.05 to 0.4 mm, the frame frequency is 20 to 50 Hz, and the phosphor is a green-to-yellow-green-emitting phosphor as described above. The term "single emission colour" means green, in this case, and does not mean a single emission spectrum. The phosphor, in this case, may in fact be a mixture containing a long after-glow or short after-glow good beam-emitting phosphor exhibiting a green emission spectrum different from that of the given green-emitting phosphor.

In a second example of a CRT, the beam diameter is 0.05 to 0.4 mm, the frame frequency is 20 to 50 Hz, and the fluorescent screen comprises, as a main constituent, an orange-emitting phosphor of the invention as described above, optionally in admixture with small amounts of other phosphors for adjusting the emission colour or the after-glow period.

In a third example of a CRT, the preferred beam diameter and frame frequency values are respectively from 0.05 to 0.4 mm and 20 to 50 Hz, and the phosphor is a white-emitting phosphor of the invention. Any pigment should be approximately the same colour as the emission colour of the phosphors, or a black pigment may be used. The pigment is preferably a black pigment such as iron oxide or tungsten.

The fluorescent screen may be formed by any known method. One example is the sedimentation coating method generally employed for the formation of the fluorescent screens of black-and-white television CRTs. The amount of the phosphor contained in the fluorescent screen is preferably from 10 to 100, more preferably 25 to 70, $g/m^2$. From the viewpoint of luminance of emission and image display, the after-glow period of the phosphor is preferably from 5 to 150 msec.

In the accompanying drawings, Figs. 1 and 2 are graphs of emission spectra of phosphors of the invention containing gold and copper, respectively, as the activator. Fig. 3 is a graph of the after-flow characteristics of phosphors of the invention and of a known $ZnS{:}1.4\times10^{-3}Au, 6\times10^{-4}Al$ phosphor. Figs. 4 and 5 are graphs of the relationship between constitution and after-glow period of phosphors of the invention (curves K and M may be ignored). Fig. 6 is explained above. Fig. 7 is a graph of chromaticity of phosphors and a CRT of the invention. Fig. 8 is a graph of emission spectra and after-glow emission spectra of phosphors of the invention.

The following Examples illustrate the invention.

To form a phosphor of the Examples, the raw materials are intimately mixed in ball mill, and then sulphur and carbon are added. The resultant mixture is charged into a quartz crucible. The crucible is covered and the mixture is fired in an electric furnace for three hours at 950°C. During firing, a carbon disulphide atmosphere develops in the crucible. After firing, the product is taken out of the crucible, washed with water, dried and sieved.

To form a CRT, the phosphor grains are applied to the surface of a plate by the sedimentation coating method, to form a fluorescent screen. A CRT as shown in Figure 6 is made using the resultant fluorescent screen and an electron gun with a certain beam diameter and a certain frame frequency.

Example 1 $ZnS{:}1.4\times10^{-3}Au, 6\times10^{-5}Ga, 6\times10^{-4}Al$

Raw materials: 1 kg ZnS, 2.93 g $HAuCl_4 \cdot H_2O$, 344 mg $Ga(NO_3)_3 \cdot 8H_2O$, 7.40 g $Al_2(SO_4)_3 \cdot 18H_2O$.

Product: cubic structure, yellow-green emission as per Fig. 1 curve A, after-glow approx. 23 msec.

Example 2 ZnS: $1.4\times10^{-3}$Au, $6\times10^{-5}$Ga, $6\times10^{-4}$Al
Product: hexagonal structure, green emission as per Fig. 1 curve B.

Example 3 $(Zn_{0.93}, Cd_{0.07})S$: $1.4\times10^{-3}$Au, $6\times10^{-5}$Ga, $6\times10^{-4}$Al
Product: hexagonal structure, yellow emission as per Fig. 1 curve C.

Example 4 $(Zn_{0.85}, Cd_{0.15})S$: $1.4\times10^{-3}$Au, $5\times10^{-5}$Ga, $6\times10^{-4}$Al
Raw materials: 800 g ZnS, 200 g CdS, 2.93 g $HAuCl_4 \cdot 4H_2O$, 287 mg $Ga(NO_3)_3 \cdot 8H_2O$, 7.40 g $Al_2(SO_4)_3 \cdot 18_2O$.
Product: hexagonal structure, orange emission as per Fig. 1 curve D, after-glow approx. 25 msec.

Example 5 ZnS: $1.2\times10^{-4}$Cu, $1.5\times10^{-5}$Ga, $3\times10^{-4}$Al
Raw materials: 1 kg crude ZnS powder, 472 mg $CuSO_4 \cdot 5H_2O$, 86 mg $Ga(NO_3)_2 \cdot 8H_2O$, 3.70 g $Al_2(SO_4)_3 \cdot 18H_2O$.
Product: approximately spherical grains, median grain size 8 µm, sharp grain size distribution, cubic crystal system.
CRT (product coating 4 mg/cm$^2$, beam diameter 0.1 mm, frame frequency 40 Hz), high quality display, after-glow approx. 55 msec, green emission spectrum as per Fig. 2 curve E, emission colour as per Fig. 7 point N, luminance 8% higher than for CRT with P39 phosphor.

Example 6 $(Zn_{0.89}, Cd_{0.11})S$: $1.2\times10^{-4}$Cu, $1.5\times10^{-5}$Ga, $3\times10^{-4}$Al
Raw materials: as Example 1, except that 150 mg ZnS are replaced by 150 mg CdS.
Product: hexagonal structure, yellow emission as per Fig. 2 curve F, after-glow approx. 35 msec.

Example 7 $(Zn_{0.78}, Cd_{0.22})S$: $1.2\times10^{-4}$Cu, $1.5\times10^{-5}$Ga, $3\times10^{-4}$Al
Raw materials: as Example 1, except that 300 g ZnS are replaced by 300 g CdS.
Product: spherical grains, median grain size 9 µm, sharp grain size distribution, hexagonal structure.
CRT (product coating 5 mg/cm$^2$, beam diameter 0.3 mm, frame frequency 45 Hz): high quality display, after-glow approx. 20 msec, orange emission as per Fig. 2 curve G, emission colour as per Fig. 7 point U ($x=0.56$, $y=0.44$), luminance approx. twice that for CRT with P27/P39 mixture.

Example 8 ZnS: $1.2\times10^{-4}$Cu, $1.2\times10^{-4}$Au, $1.5\times10^{-5}$Ga, $3\times10^{-4}$Al
Raw materials: as Example 5 plus 250 mg $HAuCl_4 \cdot 4H_2O$.
Product: cubic crystal system.
CRT (as Example 1): yellow-green emission, after-glow 40 msec, luminance 14% higher than for CRT with P39 phosphor.

Example 9 ZnS: $1.4\times10^{-3}$Au, $10^{-4}$Ga, $6\times10^{-4}$Al
Product: after-glow 27 msec, yellow emission as per Fig. 7 point Y1.

Example 10 ZnS: $1.2\times10^{-4}$Cu, $1.5\times10^{-5}$Ga, $3\times10^{-4}$Al, $10^{-6}$S
Raw materials: as Example 1 plus 70 g ZnS. The ZnS was obtained by precipitation following the addition of ammonium sulfide to an aqueous zinc sulfate solution maintained at pH 5 by the addition of sulfuric acid.
Product: approx. spherical grains, median grain size 9 µm, sharp grain size distribution.
CRT (product coating 5 mg/cm$^2$, beam diameter 0.2 mm, frame frequency 45 Hz): green emission as per Fig. 2 curve E, after-glow approx. 55 msec, luminance 10% higher than for Example 1.

Example 11 ZnS: $1.4\times10^{-3}$Au, $2\times10^{-5}$Ga, $6\times10^{-4}$Al
Product: cubic structure, after-glow characteristics as per Fig. 3 curve I, after-glow approx. 40 msec (about 160 times longer than the value of 250 µsec for the corresponding phosphor in which Ga is absent, whose characteristics are as per Fig. 3 curve H).

Example 12 $(Zn_{0.82}, Cd_{0.18})S$: $1.4\times10^{-3}$Au, $5\times10^{-5}$Ga, $6\times10^{-4}$Al
Raw materials: as Example 4, except that 50 g ZnS are replaced by 50 g CdS.
Product: spherical grains, median grain size 8 µm, sharp grain size distribution, hexagonal crystal structure.
CRT (product coating 4 mg/cm$^2$, beam diameter 0.2 mm, frame frequency 40 Hz): smooth screen of high quality, orange emission as per Fig. 1 curve Q, after-glow approx. 30 msec as per Fig. 3 curve S, high quality display, emission colour as per Fig. 7 point T ($x=0.56$, $y=0.43$), luminance approx. twice that for CRT with P27/P39 mixture.

Example 13
Materials: 7 parts by weight of the yellow-emitting phosphor of Example 6 and 3 parts by weight of the

blue-emitting phosphor ZnS: $10^{-4}$Ag, $1.5\times10^{-5}$Ga, $10^{-6}$Cl (emission colour as per Fig. 7 point B1, after-glow 35 msec), uniformly mixed.

CRT (conventional black-and-white television CRT, screen coating 4 mg/cm$^2$): white emission of high quality as per Fig. 7 point W2 (x=0.302, y=0.333) and Fig. 8 curve a, after-glow 10 msec (curve b) and 20 msec (curve c), free of colour drift.

Example 14

Materials: 7 parts by weight of the yellow-emitting phosphor of Example 9 and 3 parts by weight of the blue-emitting phosphor ZnS: $10^{-4}$Ag, $10^{-5}$Ga, $10^{-6}$Cl (emission colour as per Fig. 7 point B1, after-glow 30 msec), uniformly mixed.

CRT (screen coating 5 mg/cm$^2$, beam diameter 0.3 mm, frame frequency 45 mm): white emission of high quality as per Fig. 7 point W1 (x=0.270, y=0.350), satisfactory after-glow.

Example 15

Materials: as Example 13 except that each phosphor contained 1 µg/g S.

CRT: as Example 13, with white luminance 6% higher than for Example 13.

Fig. 4 shows the relationship between the amount of Ga used as a co-activator in a ZnS:$1.4\times10^{-3}$Au, fGa, $6\times10^{-4}$Al phosphor and its 10% luminance after-glow period. Point "o" corresponds to the case when Ga is absent; the after-glow period is approx. 250 µsec.

Fig. 5 shows the relationship between the amount of Ga used as a co-activator in a ZnS:$1.2\times10^{-3}$Cu, fGa, $3\times10^{-4}$Al phosphor and its 10% luminance after-glow period. Point "o" corresponds to the case when Ga is absent; the after-glow period is approx. 200 µsec.

Fig. 7 shows the relationship between the use of Cu (green) and Au (increasingly yellow-green) as activators, and emission luminance. Point P indicates the emission colour of a CRT using P39 phosphor. By comparison, nearer to yellow-green, to which the human eye is most sensitive, the novel CRTs provide a lighter display screen and more easily variable emission colour.

In Fig. 7, the chromaticity points B1 (x=0.147, y=0.056) Y1 (x=0.369, y=0.568) and Y2 (x=0.427, y=0.548) respectively indicate the emission colours of a long after-glow blue-emitting phosphor ZnS: $10^{-4}$Ag, $1.5\times10^{-5}$Ga, $10^{-6}$Cl, the long after-glow yellow-emitting phosphor of Example 9, and the long after-glow yellow-emitting phosphor of Example 6. The chromaticity points $W_1$ and $W_2$ respectively indicate the emission colours of the white-emitting phosphors of Examples 14 and 13.

Fig. 8 shows the emission spectrum and the after-glow spectra of the white-emitting phosphor of Example 13; curve V indicates the emission spectrum under excitation with cathode rays, and curves W and X indicate the emission spectra obtained 10 and 20 msec, respectively, after stopping the excitation. As is clear from Figs. 7 and 8, the white-emitting phosphors and the CRTs comprising them exhibit white emission of high colour purity and are essentially free of colour drift in the after-glow.

**Claims**

1. A green-to-orange-emitting sulphide phosphor, with long after-glow, which has the formula

$$(Zn_{1-x},Cd_x)S:eM,fGa,gX$$

wherein M is at least one of copper and gold; X is at least one of chlorine, bromine, iodine, fluorine and aluminium; $0\leqq x\leqq 0.4$; $10^{-8}\leqq e\leqq 10^{-2}$; $5\times10^{-7}\leqq f\leqq 2\times10^{-4}$; and $5\times10^{-8}\leqq g\leqq 5\times10^{-3}$.

2. A phosphor according to claim 1, which additionally contains $10^{-7}$ to $8\times10^{-3}$ g sulphur per gram of the matrix.

3. A phosphor according to claim 1 or claim 2, wherein x=0, $10^{-6}\leqq e\leqq 10^{-2}$ and $5\times10^{-8}\leqq g\leqq 5\times10^{-4}$.

4. A phosphor according to claim 3, wherein $10^{-5}\leqq e\leqq 5\times10^{-4}$ and $5\times10^{-5}\leqq g\leqq 2\times10^{-4}$.

5. A phosphor according to claim 1 or claim 2, wherein $0.15\leqq x\leqq 0.35$ and $10^{-6}\leqq e\leqq 10^{-2}$.

6. A phosphor according to claim 5, wherein $10^{-5}\leqq e\leqq 6\times10^{-3}$ and $5\times10^{-7}\leqq g\leqq 10^{-3}$.

7. A phosphor according to any preceding claim, wherein $5\times10^{-7}\leqq f\leqq 10^{-4}$ and $5\times10^{-8}\leqq g\leqq 5\times10^{-4}$.

8. A yellow-emitting phosphor according to any preceding claim, wherein $0\leqq x\leqq 0.3$ and $10^{-6}\leqq e\leqq 10^{-2}$.

9. A white-emitting phosphor which comprises 0.34 to 5 parts by weight of a yellow-emitting phosphor according to claim 8 and one part by weight of a long after-glow blue-emitting phosphor.

10. A phosphor according to claim 9, wherein the blue-emitting and yellow-emitting phosphors comprise a cubic crystal system as the main crystalline phase.

11. A phosphor according to claim 9, wherein the blue-emitting phosphor comprises a cubic crystal system as the main crystalline phase, the yellow-emitting phosphor comprises a hexagonal crystal system as the main crystalline phase, and $0.05\leqq x\leqq 0.3$.

12. A phosphor according to any of claims 9 to 11, wherein the blue-emitting phosphor has the formula

$$ZnS:aAg,bM',cGa,dX'$$

wherein M' is at least one of copper and gold; X' is at least one of chlorine, bromine, iodine, fluorine and aluminium; $5\times10^{-6}\leqq a\leqq 10^{-3}$; $0\leqq b\leqq 2\times10^{-4}$; $10^{-8}\leqq c\leqq 10^{-3}$; and $5\times10^{-8}\leqq d\leqq 5\times10^{-4}$.

13. An electron-excited fluorescent screen including a phosphor according to any preceding claim.

14. A screen according to claim 13, which contains 0.5 to 40% by weight, based on the weight of the phosphor, of a pigment, in which the pigment is green or black when the phosphor emits green to yellow light or orange or black when the phosphor emits orange light.

15. A display device including a screen according to claim 13 or claim 14, the device being in the form of a cathode ray tube provided with an electron gun emitting cathode rays having a beam diameter (at the fluorescent screen) and a frame frequency of, respectively, 0.05 to 0.4 mm and 20 to 50Hz, 0.01 to 0.3 mm and 30 to 45 Hz, or 0.07 to 0.3 mm and 25 to 40 Hz.

**Patentansprüche**

1. Grün bis orange emittierender Sulfid-Leuchtstoff mit langem Nachglühen, der die Formel

$$(Zn_{1-x},Cd_x)S:eM,fGa,gX$$

aufweist, worin M zumindest ein Element von Kupfer und Gold ist, X zumindest ein Element von Chlor, Brom, Jod, Fluor und Aluminium ist, $0 \leqq x \leqq 0.4$; $10^{-8} \leqq e \leqq 10^{-2}$; $5 \times 10^{-7} \leqq f \leqq 2 \times 10^{-4}$; und $5 \times 10^{-8} \leqq g \leqq 5 \times 10^{-3}$ sind.

2. Leuchtstoff nach Anspruch 1, der zusätzlich $10^{-7}$ bis $8 \times 10^{-3}$ g Schwefel pro Gramm der Matrix enthält.

3. Leuchtstoff nach Anspruch 1 oder 2, worin $x=0$, $10^{-6} \leqq e \leqq 10^{-2}$ und $5 \times 10^{-8} \leqq g \leqq 5 \times 10^{-4}$ sind.

4. Leuchtstoff nach Anspruch 3, worin $10^{-5} \leqq e \leqq 5 \times 10^{-4}$ und $5 \times 10^{-5} \leqq g \leqq 2 \times 10^{-4}$ sind.

5. Leuchtstoff nach Anspruch 1 oder 2, worin $0.15 \leqq x \leqq 0.35$ und $10^{-6} \leqq e \leqq 10^{-2}$ sind.

6. Leuchtstoff nach Anspruch 5, worin $10^{-5} \leqq e \leqq 6 \times 10^{-3}$ und $5 \times 10^{-7} \leqq g \leqq 10^{-3}$ sind.

7. Leuchtstoff nach einem der vorstehenden Ansprüche, worin $5 \times 10^{-7} \leqq f \leqq 10^{-4}$ und $5 \times 10^{-8} \leqq g \leqq 5 \times 10^{-4}$ sind.

8. Geld-emittierender Leuchtstoff nach einem der vorstehenden Ansprüche, worin $0 \leqq x \leqq 0.3$ und $10^{-6} \leqq e \leqq 10^{-2}$ sind.

9. Weiß-emittierender Leuchtstoff, der 0.34 bis 5 Gewichtsteile eines gelb-emittierenden Leuchtstoffes nach Anspruch 8 und ein Gewichtsteil eines blauemittierenden Leuchtstoffes mit langem Nachglühen umfaßt.

10. Leuchtstoff nach Anspruch 9, worin der blau-emittierende und gelb-emittierende Leuchtstoff als krisalline Hauptphase ein kubisches Kristallsystem umfassen.

11. Leuchtstoff nach Anspruch 9, worin der blau-emittierende Leuchtstoff ein kubisches Kristallsystem als kristalline Hauptphase umfaßt, der gelb-emittierende Leuchtstoff ein Hexagonal-Kristallsystem als kristalline Hauptphase umfaßt, und $0.05 \leqq x \leqq 0.3$ ist.

12. Leuchtstoff nach einem der Ansprüche 9 bis 11, worin der blau-emittierende Leuchtstoff die Formel

$$ZnS:aAg,bM',cGa,dX'$$

aufweist, worin M' zumindest ein Element von Kupfer und Gold ist, X' zumindest ein Element von Chlor, Brom, Jod, Fluor und Aluminium ist, $5 \times 10^{-6} \leqq a \leqq 10^{-3}$; $0 \leqq b \leqq 2 \times 10^{-4}$; $10^{-8} \leqq c \leqq 10^{-3}$; und $5 \times 10^{-8} \leqq d \leqq 5 \times 10^{-4}$ sind.

13. Mit Elektronen angeregter Fluoreszenz-Leuchtschirm, der einen Leuchtstoff nach einem der vorstehenden Ansprüche umfaßt.

14. Schirm nach Anspruch 13, der 0.5 bis 40 Gewichtsprozent, bezogen auf das Gewicht des Leuchtstoffes, eines Pigmentes enthält, worin das Pigment grün oder schwarz ist, wenn der Leuchtstoff grün bis gelbes Licht emittiert oder orange oder schwarz ist, wenn der Leuchtstoff oranges Licht emittiert.

15. Anzeigevorrichtung, die einen Schirm nach Anspruch 13 oder 14 umfaßt, wobei die Vorrichtung in Form eines Kathodenstrahlrohres vorliegt, der mit einem Elektronenstrahlerzeuger ausgestattet ist, der Kathodenstrahlen mit einem Strahldurchmesser (auf dem Fluoreszenzschirm) bzw. einer Bildfrequenz von 0.05 bis 0.4 mm und 20 bis 50 Hz, 0.01 bis 0.3 mm und 30 bis 45 Hz, oder 0.07 bis 0.3 mm und 25 bis 40 Hz emittiert.

**Revendications**

1. Une substance fluorescente au sulfure émettant dans la gamme verte à orange, à longue rémanence, qui répond à la formule

$$(Zn_{1-x},Cd_x)S:eM,fGa,gX$$

dans laquelle M est au moins un élément choisi parmi le cuivre et l'or; X est au moins un élément choisi parmi le chlore, le brome, l'iode, le fluor et l'aluminium; $0 \leqq x \leqq 0{,}4$; $10^{-8} \leqq e \leqq 10^{-2}$; $5 \times 10^{-7} \leqq f \leqq 2 \times 10^{-4}$; et $5 \times 10^{-8} \leqq g \leqq 5 \times 10^{-3}$.

2. Une substance fluorescente selon la revendication 1, qui contient en outre $10^{-7}$ à $8\times10^{-3}$ g de soufre par gramme de la matrice.

3. Une substance fluorescente selon la revendication 1 ou 2, dans laquelle x=0, $10^{-6}\leqq e\leqq10^{-2}$ et $5\times10^{-8}\leqq g\leqq5\times10^{-4}$.

4. Une substance fluorescente selon la revendication 3, dans laquelle $10^{-5}\leqq e\leqq5\times10^{-4}$ et $5\times10^{-5}\leqq g\leqq2\times10^{-4}$.

5. Une substance fluorescente selon la revendication 1 ou 2, dans laquelle $0,15\leqq x\leqq0,35$ et $10^{-6}\leqq e\leqq10^{-2}$.

6. Une substance fluorescente selon la revendication 5, dans laquelle $10^{-5}\leqq e\leqq6\times10^{-3}$ et $5\times10^{-7}\leqq g\leqq10^{-3}$.

7. Une substance fluorescente selon l'une quelconque des revendications précédentes, dans laquelle $5\times10^{-7}\leqq f\leqq10^{-4}$ et $5\times10^{-8}\leqq g\leqq5\times10^{-4}$.

8. Une substance fluorescente émettant dans le jaune selon l'une quelconque des revendications précédentes, dans laquelle $0\leqq x\leqq0,3$ et $10^{-6}\leqq e\leqq10^{-2}$.

9. Une substance fluorescente émettant dans le blanc qui comprend 0,34 à 5 parties en poids d'une substance fluorescente émettant dans le jaune selon la revendication 8 et une partie en poids d'une substance fluorescente émettant dans le bleu, à longue rémanence.

10. Une substance fluorescente selon la revendication 9, dans laquelle les substances fluorescentes émettant dans le bleu et émettant dans le jaune comprennent un système cristallin cubique comme phase cristalline principale.

11. Une substance fluorescente selon la revendication 9, dans laquelle la substance fluorescente émettant dans le bleu comprend un système cristallin cubique comme phase cristalline principale, la substance fluorescent émettant dans le jaune comprend un système cristallin hexagonal comme phase cristalline principale et $0,05\leqq x\leqq0,3$.

12. Une substance fluorescente selon l'une quelconque des revendications 9 à 11, dans laquelle la substance fluorescente émettant dans le bleu répond à la formule

$$ZnS:aAg,bM',cGa,dX'$$

dans laquelle M' est au moins un élément choisi parmi le cuivre et l'or; X' est au moins un élément choisi parmi le chlore, le brome, l'iode, le fluor et l'aluminium; $5\times10^{-6}\leqq a\leqq10^{-3}$; $0\leqq b\leqq2\times10^{-4}$; $10^{-8}\leqq c\leqq10^{-3}$; et $5\times10^{-8}\leqq d\leqq5\times10^{-4}$.

13. Un écran fluorescent excité par les électrons comprenant une substance fluorescente selon l'une quelconque des revendications précédentes.

14. Un écran selon la revendication 13, qui contient 0,5 à 40% en poids d'un pigment, par rapport au poids de la substance fluorescente, dans lequel le pigment est vert ou noir lorsque la substance fluorescente émet une lumière verte à jaune ou orangé ou noir lorsque la substance fluorescente émet une lumière orangée.

15. Un dispositif d'affichage comprenant un écran selon la revendication 13 ou 14, le dispositif étant sous la forme d'un tube à rayons cathodiques muni d'un canon à électrons émettant des rayons cathodiques ayant un diamètre de faisceau (sur l'écran fluorescent) et une fréquence d'images de 0,05 à 0,4 mm et 20 à 50 Hz, de 0,01 à 0,3 mm et 30 à 45 Hz, ou de 0,07 à 0,3 mm et 25 à 40 Hz, respectivement.

F I G. 1

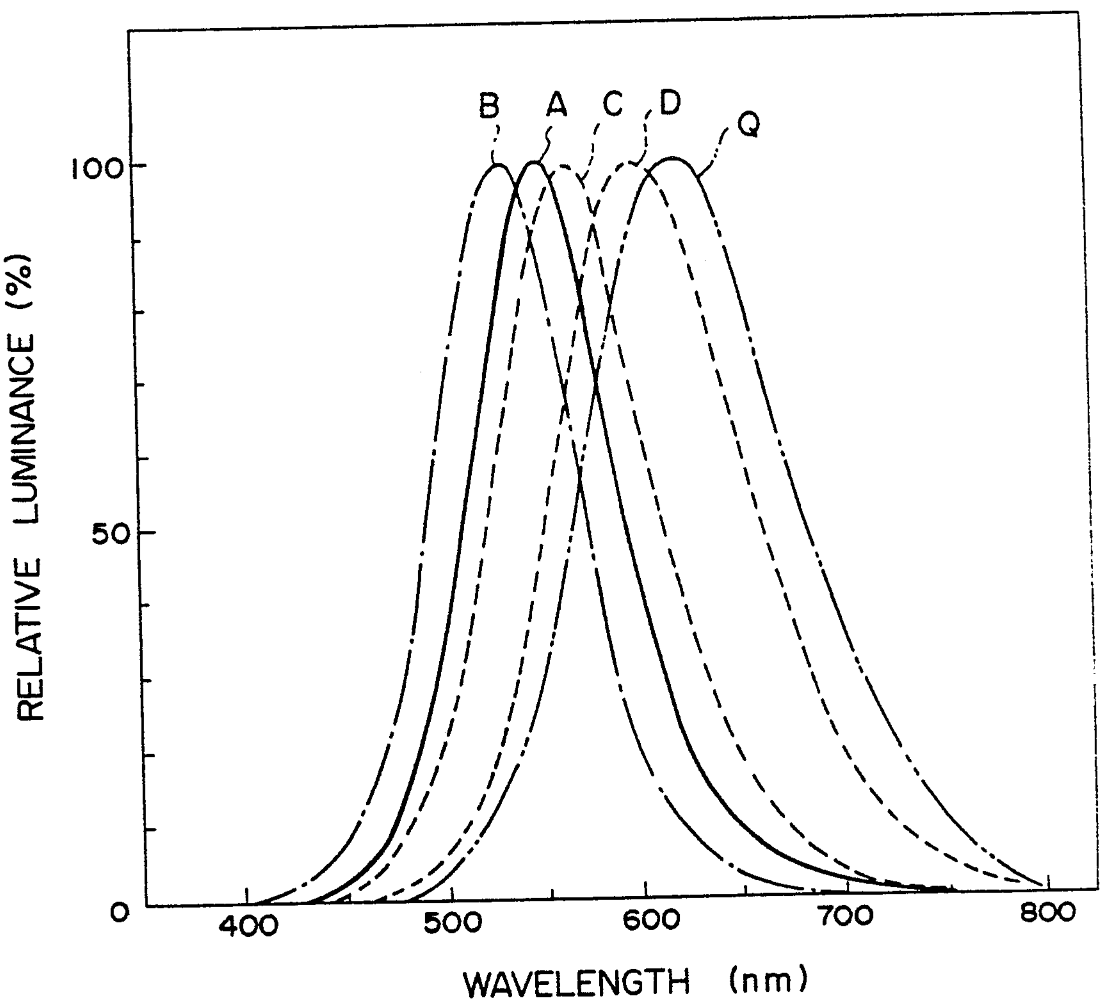
B
A
C
D
Q
100
50
0
400
500
600
700
800
RELATIVE LUMINANCE (%)
WAVELENGTH (nm)

FIG.2

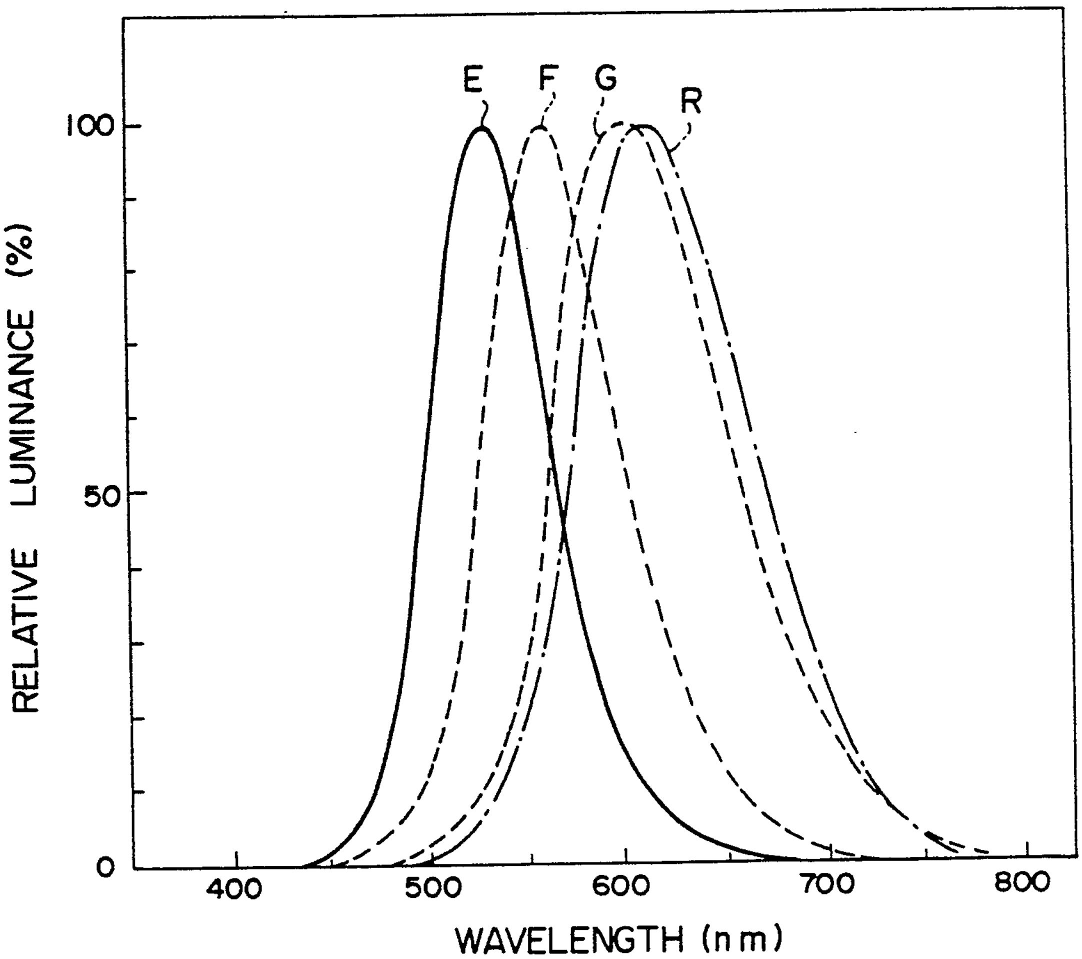
E
F
G
R
100
50
0
RELATIVE LUMINANCE (%)
400
500
600
700
800
WAVELENGTH (nm)

FIG.3

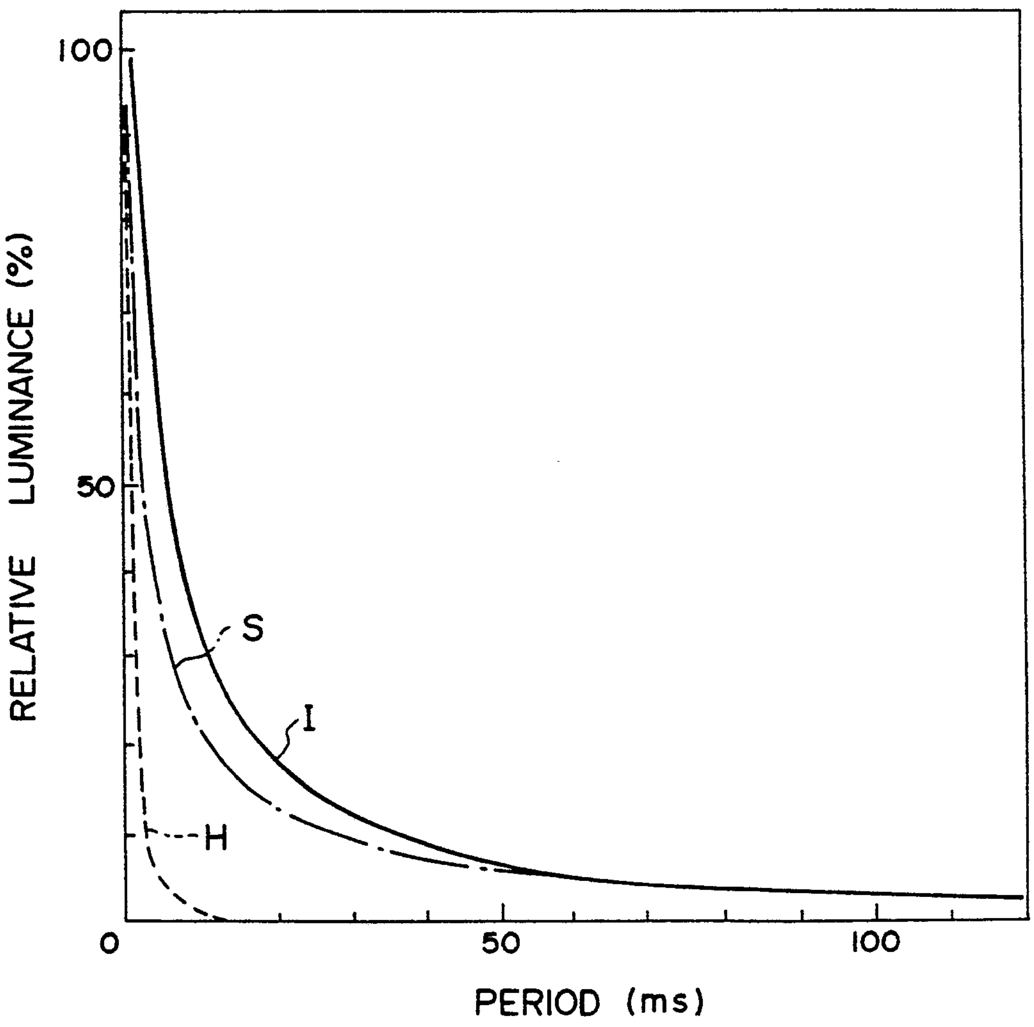

FIG. 4

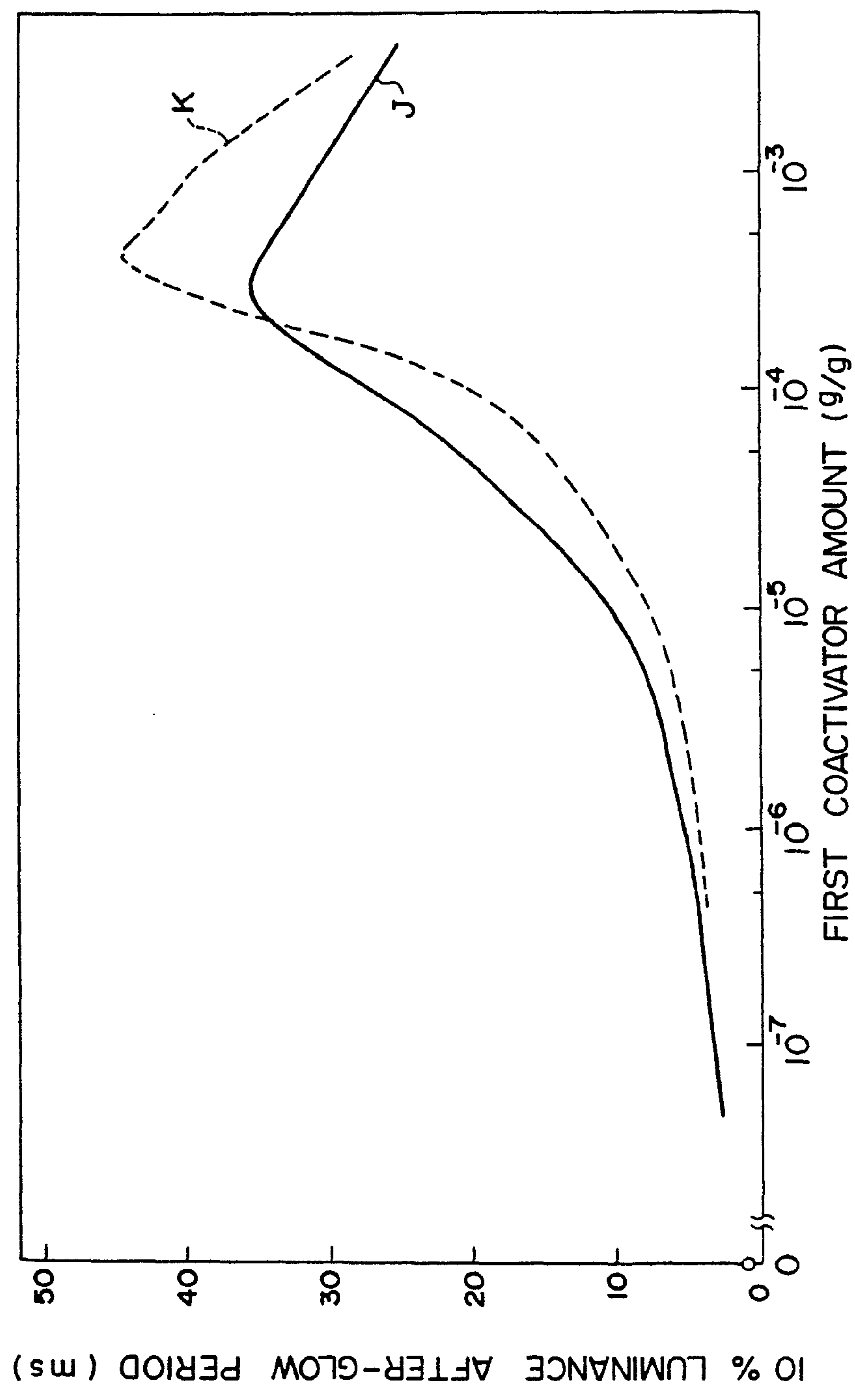
10 % LUMINANCE AFTER-GLOW PERIOD (ms)
0
10
20
30
40
50
FIRST COACTIVATOR AMOUNT (g/g)
0
$10^{-7}$
$10^{-6}$
$10^{-5}$
$10^{-4}$
$10^{-3}$
K
J

FIG.5

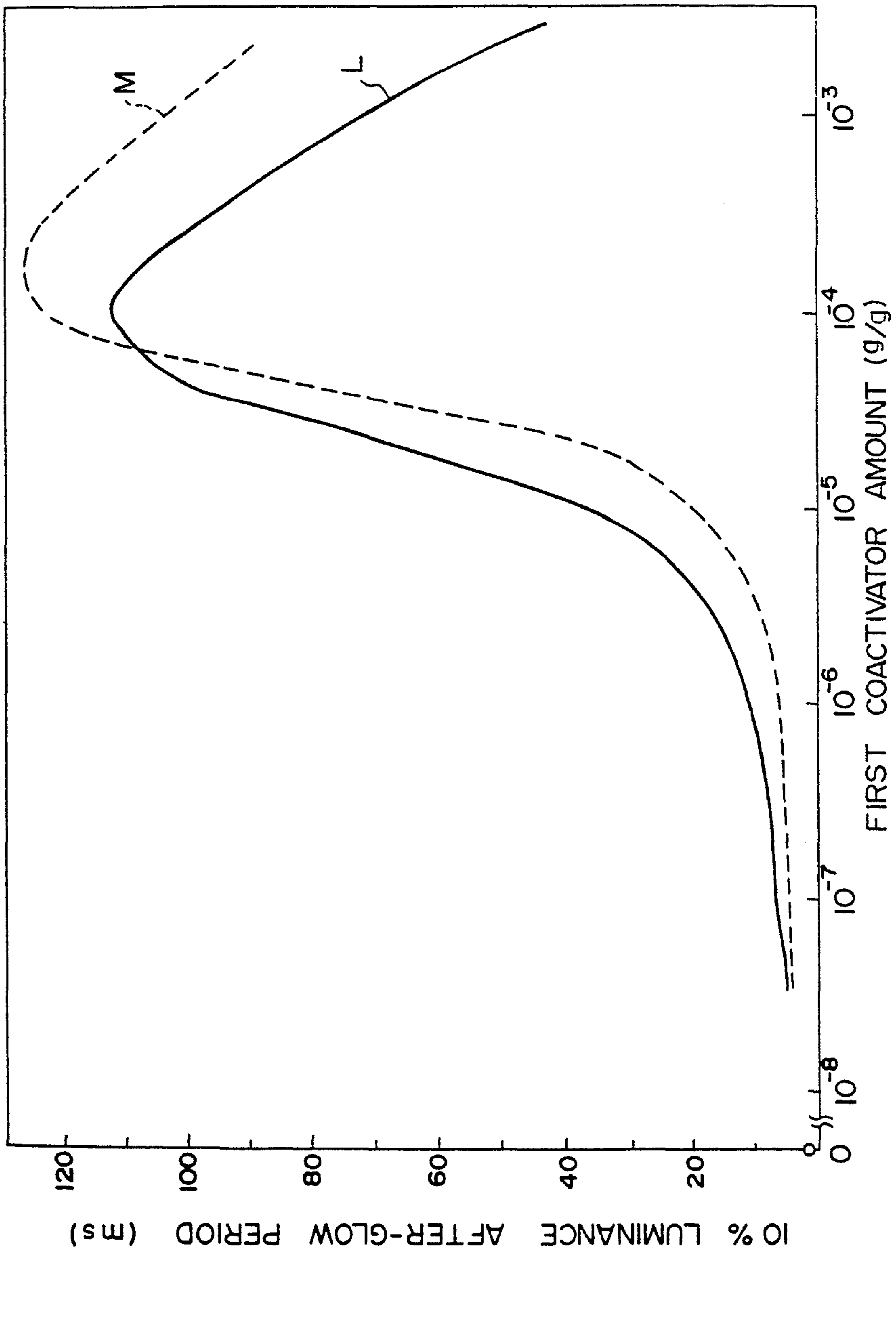
M
L
10 % LUMINANCE AFTER-GLOW PERIOD (ms)
120
100
80
60
40
20
0
0
$10^{-8}$
$10^{-7}$
$10^{-6}$
$10^{-5}$
$10^{-4}$
$10^{-3}$
FIRST COACTIVATOR AMOUNT (g/g)

F I G.6

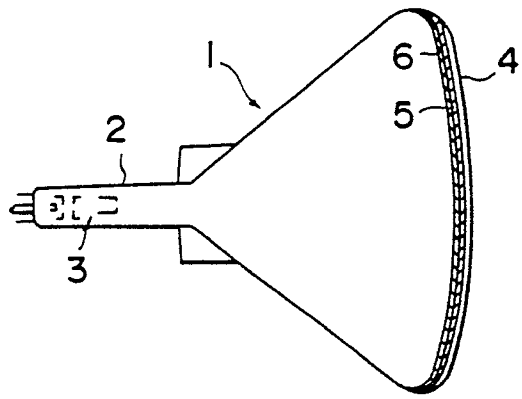
1
2
3
4
5
6

F I G.7

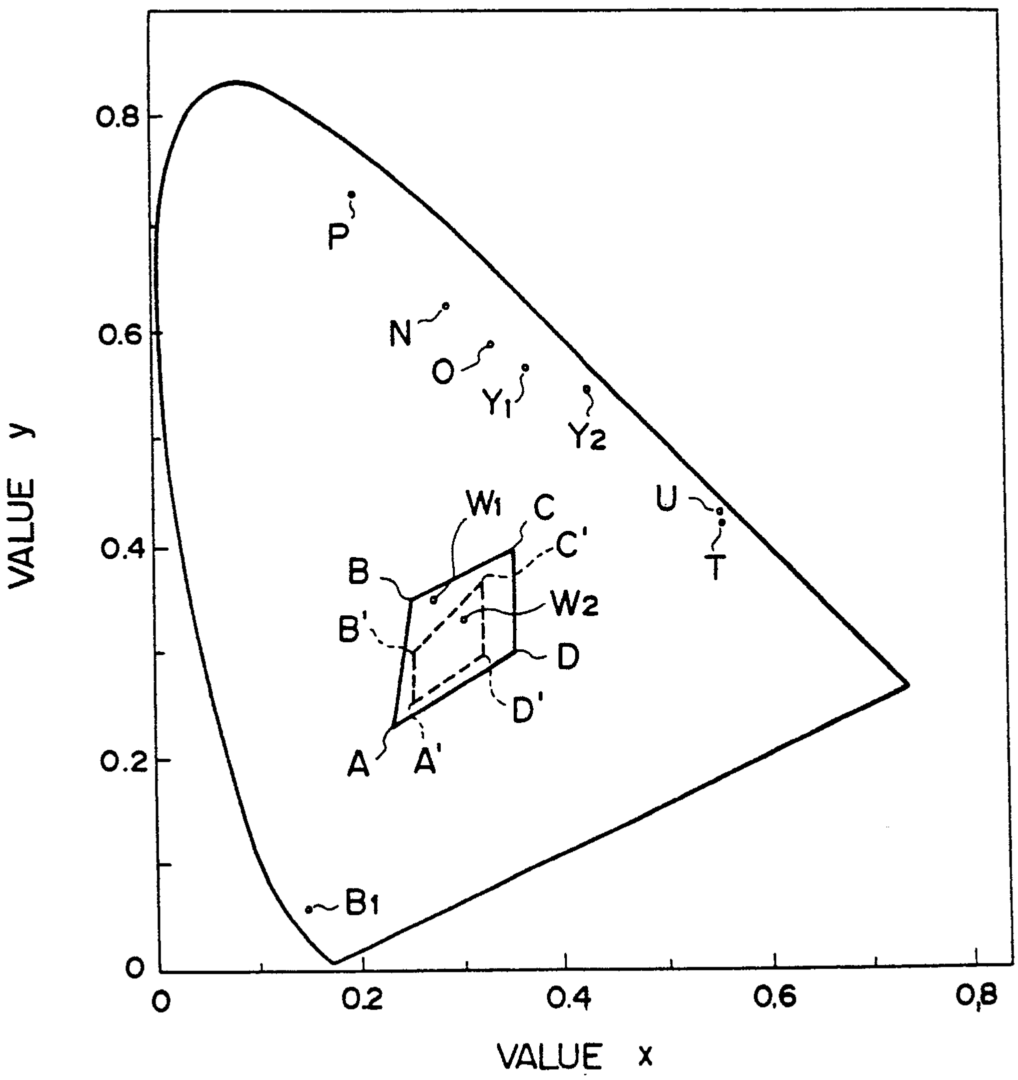
0.8
0.6
0.4
0.2
0
0
0.2
0.4
0.6
0.8
VALUE y
VALUE x
P
N
O
Y1
Y2
U
T
W1
W2
A
A'
B
B'
C
C'
D
D'
B1

FIG.8

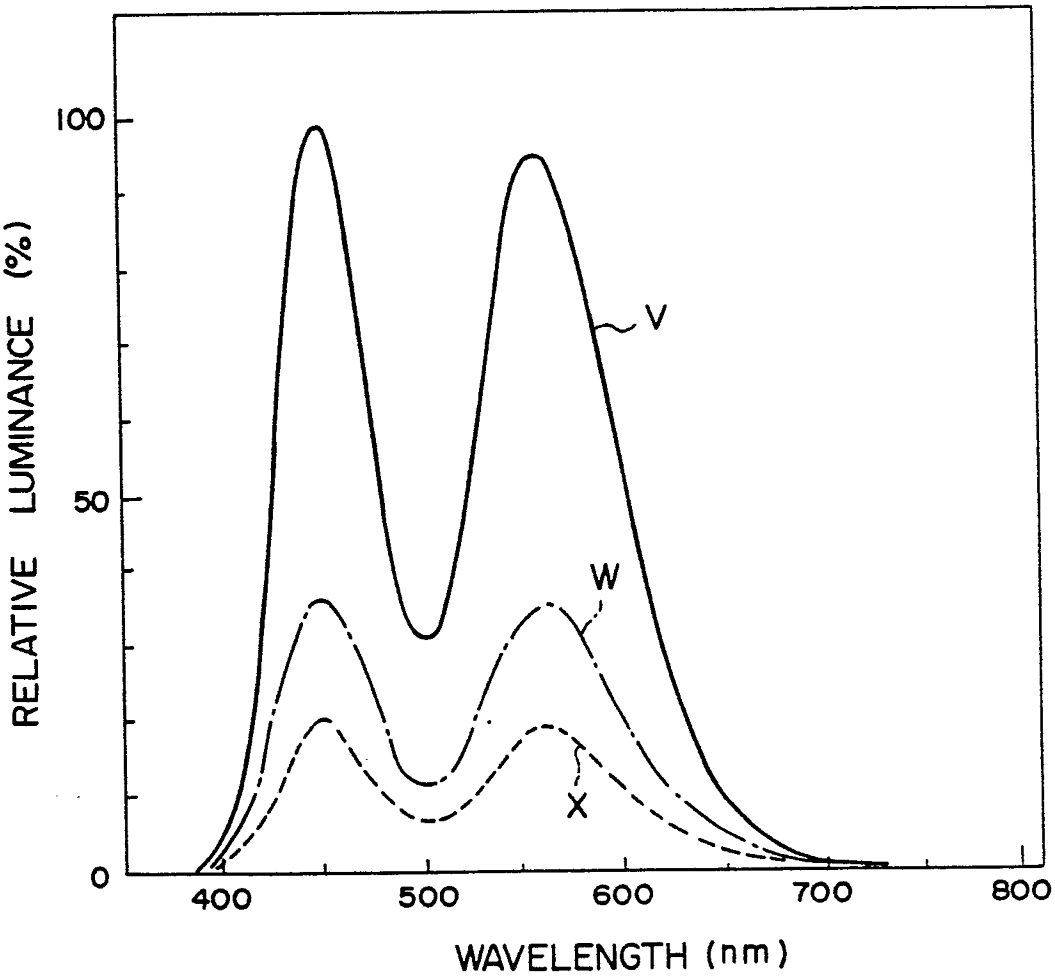
100
50
0
RELATIVE LUMINANCE (%)
400
500
600
700
800
WAVELENGTH (nm)
V
W
X